# EUROPEAN PATENT APPLICATION

(11) **EP 4 534 831 A2**
(43) Date of publication of application: **09.04.2025**
(21) Application number: 24200085.9
(22) Date of filing: 12.09.2024
(51) Int. Cl.: F02K 5/00, F02C 3/113, F02C 7/36

(54) **ENGINE ASSEMBLY FOR AN AIRCRAFT PROPULSION SYSTEM**

(30) Priority: 12.09.2023 US 202318367265
(71) Applicant: PRATT & WHITNEY CANADA CORP., Longueuil, Québec J4G 1A1 (CA)
(72) Inventor: THOMASSIN, Jean, (01BE5) Longueuil, J4G 1A1 (CA); GAGNON-MARTIN, David, (01BE5) Longueuil, J4G 1A1 (CA)
(74) Representative: Dehns

(57) **Abstract**

An engine assembly (24) includes a propulsor (22), a first gearbox (32), an engine (28), a gas turbine engine (30), and a variable speed drive, VSD, (34). The first gearbox (32) includes a first gear assembly (70) coupled with the propulsor (22). The engine (28) includes an air inlet (36), an exhaust outlet (38), and an engine output shaft (40). The engine output shaft (40) is coupled with the first gear assembly (70). The gas turbine engine (30) includes a first rotational assembly (56), a compressor section (42), a turbine section (44), and a combustor (46). The first rotational assembly (56) is configured for rotation about a rotational axis (48). The first rotational assembly (56) includes a bladed compressor rotor (62), a bladed first turbine rotor (64), and a first shaft (60) interconnecting the bladed compressor rotor (62) and the bladed first turbine rotor (64). The compressor section (42) is connected to the air inlet (36). The combustor (46) is connected to the exhaust outlet (38). The VSD (34) couples the first rotational assembly (56) to the first gear assembly (70).

## Description

### TECHNICAL FIELD

This invention relates generally to an engine assembly for an aircraft propulsion system and, more particularly, to an engine assembly including an intermittent internal combustion engine and a gas turbine engine configured to cooperatively drive a propulsor of the aircraft propulsion system.

### BACKGROUND OF THE ART

A propulsion system for an aircraft may be configured, for example, with an engine assembly including an intermittent internal combustion engine such as a rotary engine. Various configurations of such engine assemblies are known in the art. While these known engine assemblies have various advantages, there is still room in the art for improvement.

### SUMMARY

It should be understood that any or all of the features or embodiments described herein can be used or combined in any combination with each and every other feature or embodiment described herein unless expressly noted otherwise.

According to an aspect of the present invention, an engine assembly for an aircraft propulsion system includes a propulsor, a first gearbox, an engine, a gas turbine engine, and a variable speed drive. The first gearbox includes a first gear assembly coupled with the propulsor. The engine includes an air inlet, an exhaust outlet, and an engine output shaft. The engine output shaft is coupled with the first gear assembly and configured to drive rotation of the propulsor through the first gear assembly. The gas turbine engine includes a first rotational assembly, a compressor section, a turbine section, and a combustor. The first rotational assembly is configured for rotation about a rotational axis. The first rotational assembly includes a bladed compressor rotor for the compressor section, a bladed first turbine rotor for the turbine section, and a first shaft interconnecting the bladed compressor rotor and the bladed first turbine rotor. The compressor section is connected to the air inlet and configured to direct a compressed air to the air inlet. The combustor is connected to the exhaust outlet and configured to receive an exhaust gas from the exhaust outlet. The combustor is configured to direct a combustion gas through the turbine section to drive rotation of the bladed first turbine rotor. The VSD couples the first rotational assembly to the first gear assembly. The VSD is configured to selectively apply a rotational force from the first rotational assembly to the first gear assembly to further drive rotation of the propulsor through the first gear assembly.

Optionally, and in accordance with the above, the gas turbine engine may further include a second rotational assembly. The second rotational assembly may include a bladed second turbine rotor for the turbine section and a second shaft. The second shaft may interconnect the bladed second turbine rotor and the first gear assembly to further drive rotation of the propulsor through the first gear assembly. The combustor may be configured to direct the combustion gas through the turbine section to drive rotation of the bladed first turbine rotor and the bladed second turbine rotor.

Optionally, and in accordance with any of the above, the first shaft and the second shaft may be concentric shafts.

Optionally, and in accordance with any of the above, the bladed second turbine rotor may be downstream of the first bladed turbine rotor with respect to the combustion gas.

Optionally, and in accordance with any of the above, the VSD may include a first pump, a second pump, and a conduit circuit connected the first pump and the second pump in fluid communication. The first pump may be coupled with the first rotational assembly. The second pump may be coupled with the first gear assembly.

Optionally, and in accordance with any of the above, the first pump may be a variable displacement pump and the second pump may be a fixed displacement pump.

Optionally, and in accordance with any of the above, the first pump may include a displacement control assembly configured to control a displacement of the first pump. The engine assembly may further include a controller connected in signal communication with the displacement control assembly. The controller may include a processor in communication with a non-transitory memory storing instructions, which instructions when executed by the processor, may cause the processor to control the displacement control assembly to change the displacement of the first pump to apply the rotational force from the first rotational assembly to the first gear assembly.

Optionally, and in accordance with any of the above, the first pump may include a displacement control assembly configured to control a displacement of the first pump. The engine assembly may further include a controller connected in signal communication with the displacement control assembly. The controller may include a processor in communication with a non-transitory memory storing instructions, which instructions when executed by the processor, may cause the processor to control the displacement control assembly to change the displacement of the first pump to change a rotation speed of the bladed compressor rotor.

Optionally, and in accordance with any of the above, the engine may be an intermittent internal combustion engine.

Optionally, and in accordance with any of the above, the engine assembly may further include a second gearbox and a drive shaft. The second gearbox may include a second gear assembly. The drive shaft may couple the first gear assembly with the second gear assembly. The second gear assembly may couple the drive shaft with the propulsor.

Optionally, and in accordance with any of the above, the engine assembly may further include an electric control assembly including an electric motor and a battery. The electric motor may be coupled to the second gear assembly. The electric motor may be electrically connected to the battery.

According to another aspect of the present invention, an engine assembly for an aircraft propulsion system includes a propulsor, a gearbox, an engine, and a gas turbine engine. The gearbox includes a gear assembly coupled with the propulsor. The engine includes an air inlet, an exhaust outlet, and an engine output shaft. The engine output shaft is coupled with the gear assembly and configured to drive rotation of the propulsor through the gear assembly. The gas turbine engine includes a first rotational assembly, a second rotational assembly, a compressor section, a turbine section, and a combustor. The first rotational assembly and the second rotational assembly are configured for rotation about a rotational axis. The first rotational assembly includes a bladed compressor rotor for the compressor section, a bladed first turbine rotor for the turbine section, and a first shaft interconnecting the bladed compressor rotor and the bladed first turbine rotor. The second rotational assembly includes a bladed second turbine rotor and a second shaft. The first shaft and the second shaft are coupled with the gear assembly to further drive rotation of the propulsor through the gear assembly. The compressor section is connected to the air inlet and configured to direct a compressed air to the air inlet. The combustor is connected to the exhaust outlet and configured to receive an exhaust gas from the exhaust outlet. The combustor is configured to direct a combustion gas through the turbine section to drive rotation of the bladed first turbine rotor.

Optionally, and in accordance with any of the above, the bladed second turbine rotor may be downstream of the first bladed turbine rotor with respect to the combustion gas.

Optionally, and in accordance with any of the above, the first shaft may be coupled with the gear assembly by a variable speed drive (VSD).

Optionally, and in accordance with any of the above, the turbine section may be disposed between the combustor and the compressor section.

Optionally, and in accordance with any of the above, the engine assembly may further include a heat exchanger connected in fluid communication between the compressor section and the air inlet. The heat exchanger may be configured to cool the compressed air directed from the compressor section to the air inlet.

According to another aspect of the present invention, an engine assembly for an aircraft propulsion system includes a propulsor, a gearbox, an engine, and a gas turbine engine. The gearbox includes a gear assembly coupled with the propulsor. The engine includes an air inlet, an exhaust outlet, and an engine output shaft. The engine output shaft is coupled with the gear assembly and configured to drive rotation of the propulsor through the gear assembly. The gas turbine engine includes a first rotational assembly, a second rotational assembly, a compressor section, a turbine section, and a combustor. The first rotational assembly and the second rotational assembly are configured for rotation about a rotational axis. The first rotational assembly includes a bladed compressor rotor for the compressor section, a bladed first turbine rotor for the turbine section, and a first shaft interconnecting the bladed compressor rotor and the bladed first turbine rotor. The second rotational assembly includes a bladed second turbine rotor and a second shaft. The second shaft is coupled with the gear assembly to further drive rotation of the propulsor through the gear assembly. The compressor section is connected to the air inlet and configured to direct a compressed air to the air inlet. The combustor is connected to the exhaust outlet and configured to receive an exhaust gas from the exhaust outlet. The combustor is configured to direct a combustion gas through the turbine section to drive rotation of the bladed first turbine rotor.

Optionally, and in accordance with any of the above, the engine assembly may further include a variable speed drive (VSD) coupling the first rotational assembly to the gear assembly. The VSD may be configured to selectively apply a rotational force from the first rotational assembly to the gear assembly.

Optionally, and in accordance with any of the above, the VSD may include a first pump, a second pump, and a conduit circuit connected the first pump and the second pump in fluid communication. The first pump may be coupled with the first rotational assembly. The second pump may be coupled with the gear assembly.

Optionally, and in accordance with any of the above, one of the first pump or the second pump may be a variable displacement pump and another of the first pump or the second pump may be a fixed displacement pump.

The present invention, and all its aspects, embodiments and advantages associated therewith will become more readily apparent in view of the detailed description provided below, including the accompanying drawings.

### DESCRIPTION OF THE DRAWINGS

FIG. 1 illustrates a perspective view of aircraft including propulsion system, in accordance with one or more embodiments of the present invention.
FIG. 2 schematically illustrates an engine assembly for an aircraft propulsion system, in accordance with one or more embodiments of the present invention.
FIG. 3 schematically illustrates a variable speed drive (VSD) for the engine assembly of FIG. 2, in accordance with one or more embodiments of the present invention.
FIG. 4 schematically illustrates a hybrid-electric configuration for the engine assembly of FIG. 2, in accordance with one or more embodiments of the present invention.
FIG. 5 schematically illustrates another hybrid-electric configuration for the engine assembly of FIG. 2, in accordance with one or more embodiments of the present invention.

### DETAILED DESCRIPTION

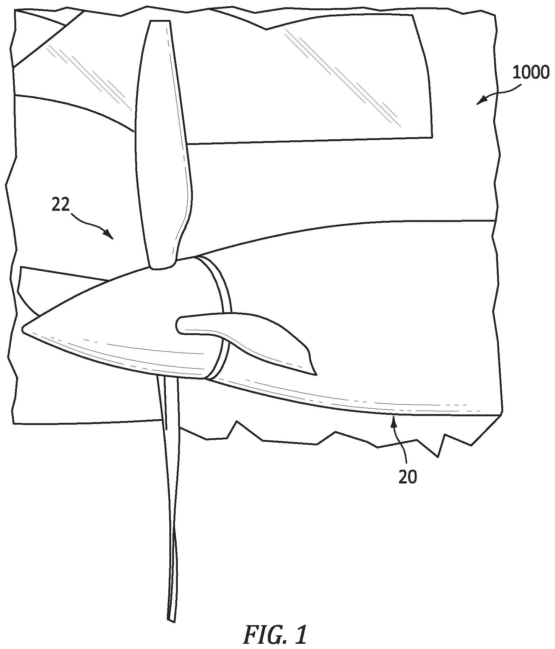

FIG. 1 illustrates a perspective view of an aircraft 1000. Briefly, the aircraft 1000 may be a fixed-wing aircraft (e.g., an airplane), a rotary-wing aircraft (e.g., a helicopter), a tilt-rotor aircraft, a tilt-wing aircraft, or another aerial vehicle. Moreover, the aircraft may be a manned aerial vehicle or an unmanned aerial vehicle (UAV, e.g., a drone). The aircraft 1000 includes a propulsion system 20 and a propulsor 22. The propulsion system 20 is configured to drive rotation of the propulsor 22 to provide propulsion (e.g., generate thrust) for the aircraft 1000. The propulsor 22 of FIG. 1 is configured as a propeller, however, the present invention is not limited to any particular configuration of the propulsor 22.

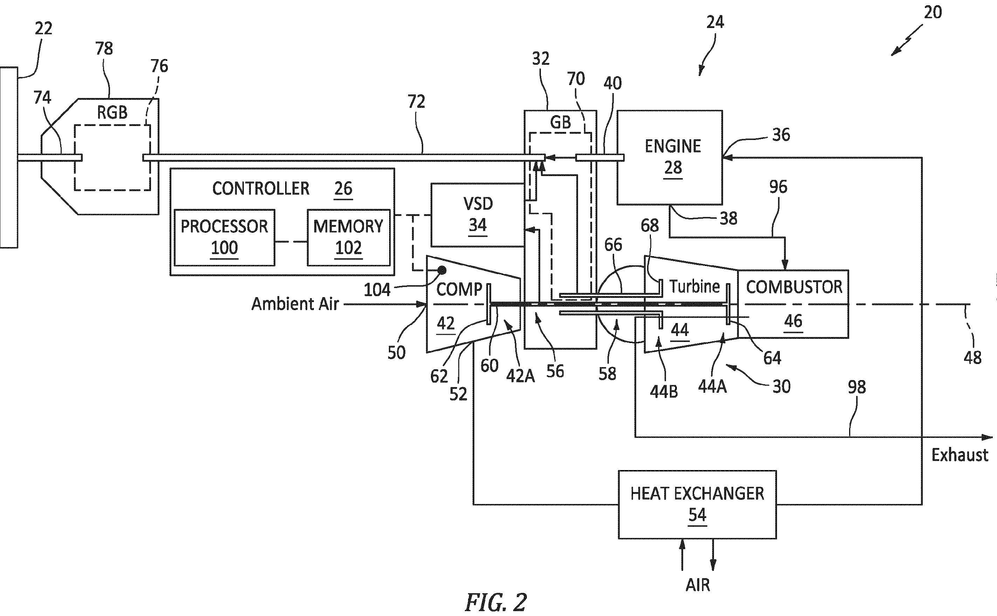

FIG. 2 schematically illustrates the propulsion system 20. The propulsion system 20 of FIG. 2 includes an engine assembly 24. The propulsion system 20 may additionally include a controller 26. The engine assembly 24 of FIG. 2 includes an engine 28, a gas turbine engine 30, a gearbox 32, and a variable speed drive (VSD) 34.

The engine 28 of FIG. 2 is configured as an internal combustion engine using intermittent combustion during operation. The engine 28 is an engine configuration other than a gas turbine engine configuration. For example, the engine 28 may be a reciprocating engine such as, but not limited to, a piston engine or a rotary engine (e.g., a Wankel engine). The engine 28 includes an air inlet 36, an exhaust outlet 38, and an engine output shaft 40. The engine 28 receives compressor air from the gas turbine engine 30 at the air inlet 36 and directs exhaust gas to the gas turbine engine 30 from the exhaust outlet 38, as will be discussed in further detail. The engine 28 drives rotation of the engine output shaft 40. The engine output shaft 40 is coupled with the gearbox 32 to drive, at least in part, rotation of the propulsor 22.

The gas turbine engine 30 of FIG. 2 includes a compressor section 42, a turbine section 44, and a combustor 46 arranged along a rotational axis 48 (e.g., an axial centerline) of the gas turbine engine 30. The compressor section 42 of FIG. 2 includes a compressor 42A. The turbine section 44 of FIG. 2 (e.g., a recovery turbine section) includes a high-pressure turbine 44A and a low-pressure turbine 44B (e.g., a power turbine). The combustor 46 is disposed at (e.g., on, adjacent, or proximate) an upstream end of the turbine section 44. For example, the combustor 46 may be disposed with the turbine section 44 positioned between the combustor 46 and the compressor section 42.

The compressor section 42 includes an air inlet 50 and an air outlet 52. The air inlet 50 is connected in fluid communication with an air intake of the propulsion system 20 to receive a flow of ambient air from outside the propulsion system 20. The air outlet 52 is connected in fluid communication with the air inlet 36 to direct compressed air from the compressor 42A to the air inlet 36. The engine assembly 24 may include a heat exchanger 54 (e.g., an intercooler) connected in fluid communication between the air outlet 52 and the air inlet 36 to cool the compressed air directed to the air inlet 36 from the air outlet 52. The heat exchanger 54 may be configured to receive ambient air (e.g., from a propulsion system 20 air scoop or another air source) for cooling the compressed air. The present invention, however, is not limited to any particular cooling medium for the heat exchanger 54.

Components of the compressor section 42 and the turbine section 44 form a first rotational assembly 56 (e.g., a high-pressure spool) and a second rotational assembly 58 (e.g., a low-pressure or power spool) mounted for rotation about the rotational axis 48. While the gas turbine engine 30 is described herein as including a two-spool configuration, the present invention is also applicable to single-spool gas turbine engine configurations.

The first rotational assembly 56 includes a first shaft 60, a bladed compressor rotor 62 for the compressor 42A, and a bladed first turbine rotor 64 for the high-pressure turbine 44A. The first shaft 60 interconnects the bladed compressor rotor 62 and the bladed turbine rotor 64. The first shaft 60 may extend through the gearbox 32 as shown, for example, in FIG. 2. The first shaft 60 is coupled with the VSD 34, as will be discussed in further detail.

The second rotational assembly 58 includes a second shaft 66 and a bladed second turbine rotor 68 for the low-pressure turbine 44B. The second shaft 66 interconnects the bladed second turbine rotor 68 with the gearbox 32. The second shaft 66 is coupled with the gearbox 32 to drive, at least in part, rotation of the propulsor 22. The first shaft 60 and the second shaft 66 are concentric and rotate about the rotational axis 48. The present invention, however, is not limited to concentric configurations of the first shaft 60 and the second shaft 66 and the first shaft 60 and the second shaft 66 may alternatively be configured for rotation about discrete rotational axes.

The gearbox 32 of FIG. 2 includes a gear assembly 70. The gear assembly 70 is coupled with the engine output shaft 40, the second shaft 66, and the VSD 34. The gear assembly 70 is additionally coupled with a drive shaft 72 of the engine assembly 24. Rotational inputs of the engine output shaft 40, the second shaft 66, and the VSD 34 (e.g., from the first shaft 60) are combined by the gear assembly 70 to drive rotation of the drive shaft 72. The drive shaft 72 of FIG. 2 is coupled with an input shaft 74 of the propulsor 22 by a gear assembly 76 of a reduction gearbox (RGB) 78 of the engine assembly 24. The gear assembly 76 is configured to drive rotation of the input shaft 74 at a reduced rotational speed relative to the drive shaft 72. The present invention, however, is not limited to the foregoing exemplary coupling of the propulsor 22 with the gear assembly 70. For example, the drive shaft 72 may alternatively be directly connected to the propulsor 22. The gear assembly 76 may include an epicyclic gear assembly (e.g., a planetary gear assembly) coupling the engine output shaft 40, the second shaft 66, and the VSD 34 with the drive shaft 72. The present invention, however, is not limited to any particular gear configuration for the gear assembly 70.

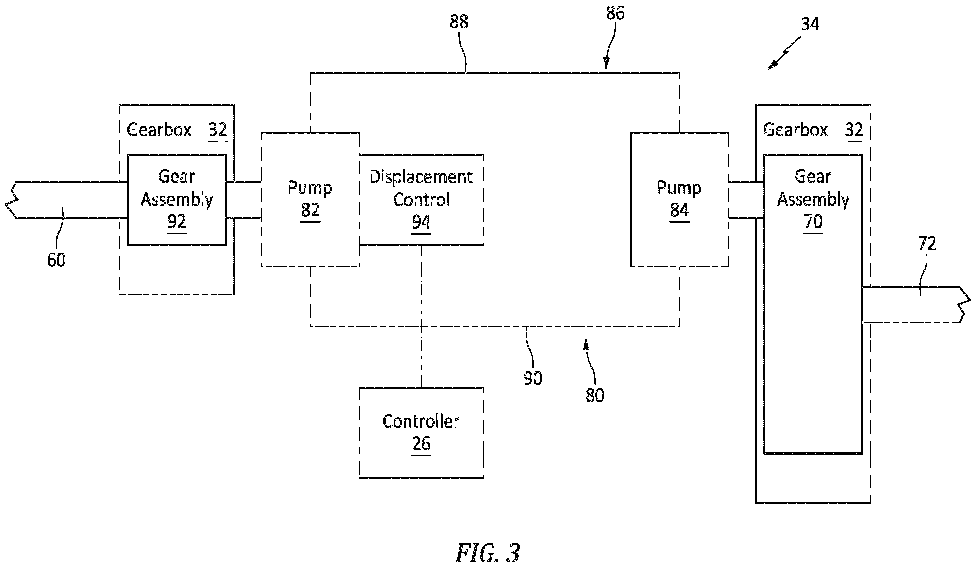

FIG. 3 illustrates an exemplary configuration of the VSD 34. The VSD 34 of FIG. 3 includes a hydrostatic transmission assembly 80. The hydrostatic transmission assembly 80 includes a first pump 82 and a second pump 84. The first pump 82 and the second pump 84 are coupled in bi-directional fluid communication by a conduit circuit 86. The conduit circuit 86 includes a first conduit portion 88 (e.g., a supply conduit or a return conduit) and a second conduit portion 90 (e.g., a supply conduit or a return conduit). Each of the first conduit portion 88 and the second conduit portion 90 extends between and to the first pump 82 and the second pump 84. The conduit circuit 86 is configured to direct a fluid from the first pump 82 to the second pump 84 and from the second pump 84 to the first pump 82. The conduit circuit 86 may include any suitable pipe, hose, tube, and/or other conduit to direct the fluid between the first pump 82 and the second pump 84. The fluid for the hydrostatic transmission assembly 80 may be a hydraulic fluid such as, but not limited to, oil or another lubricant. However, the present invention is not limited to any particular fluid for the hydrostatic transmission assembly 80.

The first pump 82 is coupled with the first shaft 60. For example, the gearbox 32 may include a gear assembly 92 coupling the first pump 82 with the first shaft 60. The first pump 82 may alternatively be coupled with the first shaft 60 by a clutch or another suitable mechanical coupling assembly such that rotation of the first shaft 60 may drive operation of the first pump 82 to pump a fluid through the conduit circuit 86. The first pump 82 of FIG. 3 is configured as a variable displacement pump. For example, the first pump 82 may be configured as a variable displacement piston pump. The first pump 82 includes a displacement control assembly 94 configured to selectively control a displacement (e.g., a pumping volume) of the first pump 82. The displacement control assembly 94 may include, for example, a swash plate for the first pump 82. The swash plate may be selectively positioned, for example, by an actuator (e.g., a hydraulic actuator, an electro-mechanical actuator, etc.) to control the displacement of the first pump 82 and, thereby, control a flow rate of fluid through the conduit circuit 86. For example, the swash plate may control a piston stroke length for the pumping pistons of the first pump 82. The present invention, however, is not limited to any particular configuration of the displacement control assembly 94.

The second pump 84 is coupled with the drive shaft 72. For example, the second pump 84 may be coupled to the drive shaft 72 by the gear assembly 70. The second pump 84 may be configured as a fixed displacement pump. For example, the second pump 84 may be configured as a fixed displacement piston pump.

Referring again to FIG. 2, operation of the engine 28 includes a first combustion stage (e.g., an intermittent internal combustion stage) for the engine assembly 24 in which a fuel (e.g., diesel fuel, kerosene fuel, etc.) is mixed and burned with the compressed air from the air inlet 36 and resultant combustion gas is exhausted from the engine 28 at the exhaust outlet 38 as exhaust gas 96. The exhaust gas 96 is directed from the exhaust outlet 38 to the combustor 46. Operation of the engine 28 drives rotation of the engine output shaft 40 which, in turn, drives rotation of the propulsor 22 (e.g., through the gear assembly 70, the drive shaft 72, the gear assembly 76, and/or the input shaft 74).

To facilitate a reduction in harmful exhaust emissions from the engine 28, the first combustion stage may include a lean fuel-to-air ratio. For example, the compressed air directed to the engine 28 from the compressor 42A, and subsequently mixed with the fuel, may be in excess of a stoichiometric ratio for the fuel-air mixture. As a result, the exhaust gas 96 from the engine 28 may include a substantial quantity of oxygen which was unused in the first combustion stage. Because a significant amount of engine assembly 24 power may be used in the operation of the compressor 42A to compress the air supplied to the engine 28, this unused oxygen in the exhaust gas 96 could, in at least some conventional aircraft propulsion systems, represent wastage of engine assembly 24 power and, therefore, reduced engine assembly 24 efficiency.

The exhaust gas 96 is directed to the combustor 46 to facilitate a second combustion stage for the engine assembly 24 in which a fuel is mixed and burned within the exhaust gas 96 within a combustion chamber of the combustor 46. The fuel directed to the combustor 46 for the second combustion stage may be the same as or different than the fuel used for the first combustion stage. This second combustion stage within the combustor 46 is accomplished with the unused oxygen in the exhaust gas 96 produced in the first combustion stage in the engine 28. As a result, additional engine power for the engine assembly 24 can be extracted by the gas turbine engine 30 using the unused oxygen in the exhaust gas 96.

Combustion gas 98 from the combustor 46 is directed through the high-pressure turbine 44A and the low-pressure turbine 44B. The bladed first turbine rotor 64 and the bladed second turbine rotor 68 rotationally drive the first rotational assembly 56 and the second rotational assembly 58, respectively, in response to the combustion gas 98 flow through the high-pressure turbine 44A and the low-pressure turbine 44B. In particular, the bladed first turbine rotor 64 drives rotation of the bladed compressor rotor 62 with the first shaft 60, thereby facilitating compression of ambient air for the engine 28. The bladed second turbine rotor 68 drives rotation of the propulsor 22 with the second shaft 66 (e.g., through the gear assembly 70, the drive shaft 72, the gear assembly 76, and/or the input shaft 74) in combination with the engine 28 (e.g., the engine output shaft 40). After flowing through the high-pressure turbine 44A and the low-pressure turbine 44B, the combustion gas 98 is exhausted from the propulsion system 20.

During some operational conditions of the engine assembly 24, an output power of the first rotational assembly 56 may be greater than work required by the compressor 42A to compress ambient air for the engine 28. Accordingly, the VSD 34 may selectively apply at least some rotational force from the first shaft 60 to the drive shaft 72 (e.g., with the gear assembly 70). In other words, output power of the first rotational assembly 56 may be variably extracted by the VSD 34 and applied for driving rotation of the propulsor 22 (e.g., in combination with the engine 28 and the second rotational assembly 58), thereby reducing engine 28 loading (e.g., fuel use) while maintaining the desired bladed compressor rotor 62 and propulsor 22 rotation speeds. Briefly referring again to FIG. 3, for example, rotation of the first shaft 60 may drive the first pump 82 to pump a fluid through the conduit circuit 86 and the second pump 84, and thereby drive rotation of the second pump 84 to apply a rotational force to the drive shaft 72 (e.g., with the gear assembly 70). During some other operational conditions of the engine assembly 24, the VSD 34 may not apply any rotational force from the first shaft 60 to the drive shaft 72 (e.g., the first pump 82 may be de-clutched from the first shaft 60 or the displacement of the first pump 82 may be controlled such that the first pump 82 does not drive rotation of the second pump 84).

The controller 26 includes a processor 100 connected in signal communication with memory 102. The processor 100 may include any type of computing device, computational circuit, processor(s), CPU, computer, or the like capable of executing a series of instructions that are stored in the memory 102. Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. The instructions may include an operating system, and/or executable software modules such as program files, system data, buffers, drivers, utilities, and the like. The executable instructions may apply to any functionality described herein to enable the engine assembly 24 and its components to accomplish the same algorithmically and/or by coordination of the engine assembly 24 components. The memory 102 may include a single memory device or a plurality of memory devices (e.g., a computer-readable storage device that can be read, written, or otherwise accessed by a general purpose or special purpose computing device), including any processing electronics and/or processing circuitry capable of executing instructions. The present invention is not limited to any particular type of memory device, which may be non-transitory, and may include read-only memory, random access memory, volatile memory, nonvolatile memory, static memory, dynamic memory, flash memory, cache memory, volatile or nonvolatile semiconductor memory, optical disk storage, magnetic disk storage, magnetic tape, other magnetic storage devices, or any other medium capable of storing one or more instructions, and/or any device that stores digital information. The memory device(s) may be directly or indirectly coupled to the controller 26. The controller 26 may include, or may be in communication with, an input device that enables a user to enter data and/or instructions, and may include, or be in communication with, an output device configured, for example to display information (e.g., a visual display or a printer), or to transfer data, etc. Communications between the controller 26 and other electrical and/or electronic components (e.g., controllers, sensors, etc.) may be via a hardwire connection or via a wireless connection. A person of skill in the art will recognize that portions of the controller 26 may assume various forms (e.g., digital signal processor, analog device, etc.) capable of performing the functions described herein.

The controller 26 may form or otherwise be part of an electronic engine controller (EEC) for the engine assembly 24. For example, the EEC may control operating parameters of the engine 28 and/or the gas turbine engine 30 such as, but not limited to, fuel flow, stator vane position (e.g., variable compressor inlet guide vane (IGV) position), compressor air bleed valve position, shaft (e.g., first shaft 60 and/or second shaft 66) torque and/or rotation speed, etc. so as to control an engine power or performance of the engine assembly 24. The EEC may modulate fuel flow to the engine 28 and/or the combustor 46 to obtain a desired output power of the engine assembly 24. For example, the EEC may modulate the fuel flow using a closed-loop process in which an output power or other operating parameter of the engine assembly 24 is measured and fuel flow to the engine 28 and/or the gas turbine engine 30 is increased or decreased as a function of the measured output power or operational parameter. In some embodiments, the EEC may be part of a full authority digital engine control (FADEC) system for the propulsion system 20.

The controller 26 may include or otherwise be connected in signal communication with one or more sensors of the engine assembly 24 to measure operational parameters of the engine assembly 24. For example, the controller 26 of FIG. 2 is connected in signal communication with sensors 104 of the compressor section 42. The sensors 104 of FIG. 2 may include pressure and temperature sensors such as, but not limited to, a compressor inlet pressure sensor, a compressor outlet pressure sensor, a compressor inlet temperature sensor, and a compressor outlet temperature sensor to facilitate measurement of air flow parameters of the compressor section 42 by the controller 26. The sensors 104 of FIG. 2 may additionally include a rotation speed sensor to facilitate measurement of rotation speed of the first rotational assembly 56 (e.g., the bladed compressor rotor 62 speed) by the controller 26.

Referring to FIGS. 2 and 3, the controller 26 may be connected in signal communication with the displacement control assembly 94 to allow the controller 26 to control the displacement of the first pump 82 using the displacement control assembly 94 and, thereby, to control an amount of power which may be extracted from the first rotational assembly 56 and applied to the drive shaft 72. For example, the controller 26 may identify a target rotation speed for the first rotational assembly 56 (e.g., the bladed compressor rotor 62) to provide optimal compressed air flow for the engine 28 while also preventing the compressor section 42 from exceeding compressor surge and/or compressor stall operating limits. The target rotation speed may be identified, for example, using predetermined target rotation speed values (e.g., look-up tables or other databases) stored in memory 102 for the air flow parameters measured using the sensors 104. During some operational conditions of the engine assembly 24, an output power of the first rotational assembly 56 may be greater than work required by the compressor 42A to compress ambient air for the engine 28 (e.g., the first rotational assembly 56 rotation speed may be greater than the target rotation speed). Accordingly, the controller 26 may control a displacement of the first pump 82 to selectively apply at least some rotational force from the first shaft 60 to the drive shaft 72. In other words, output power of the first rotational assembly 56 may be variably extracted by the VSD 34 and applied for driving rotation of the propulsor 22 (e.g., in combination with the engine 28 and the second rotational assembly 58), thereby reducing engine 28 loading (e.g., fuel use) while maintaining the desired bladed compressor rotor 62 and propulsor 22 rotation speeds.

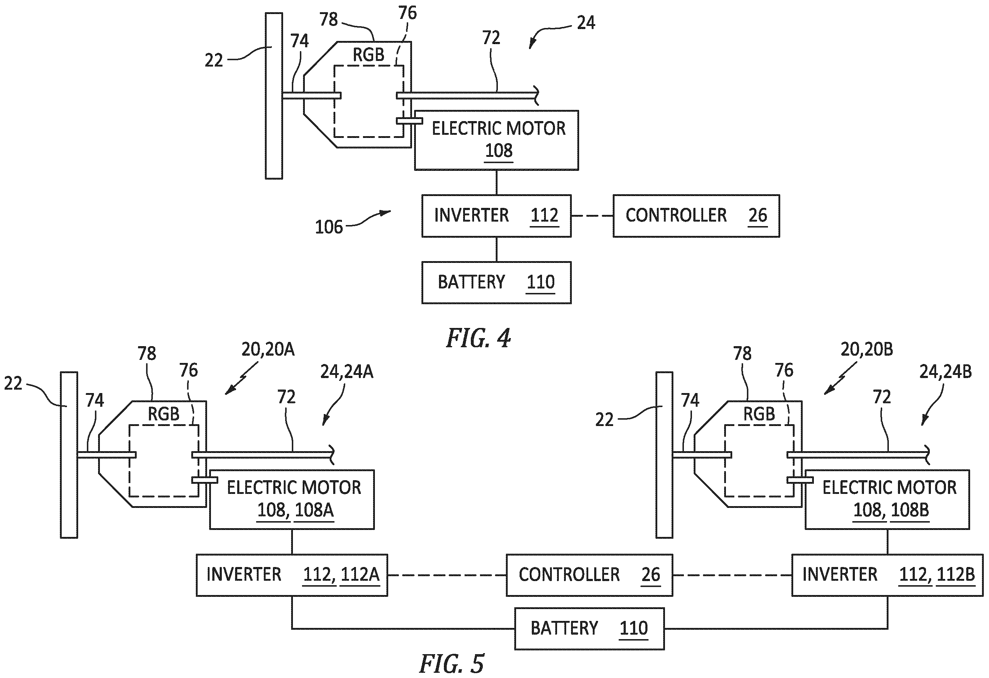

Referring to FIGS. 4 and 5, in some embodiments, the engine assembly 24 may be configured as a hybrid-electric engine assembly. For example, the engine assembly 24 may include or otherwise be electrically connected to an electric control assembly 106 including an electric motor 108 configured to drive rotation of the propulsor 22 alone or in combination with the engine 28 and/or the gas turbine engine 30.

The electric control assembly 106 of FIG. 4 includes the electric motor 108, a battery 110, and an inverter 112. The electric motor 108 includes an output shaft 114 coupled with the gear assembly 76. The electric motor 108 is electrically connected to the battery 110. The battery 110 may be disposed within the propulsion system 20 or within the aircraft 1000 (see FIG. 1) outside of the propulsion system 20. The inverter 112 is electrically connected between the electric motor 108 and the battery 110. The inverter 112 is configured to control a frequency, a voltage, and/or a current of electrical power supplied to the electric motor 108 from the battery 110, for example, to control a rotation speed and/or a torque of the electric motor 108. The inverter 112 may be physically integrated with the electric motor 108 or may be a physically discrete electrical component. The controller 26 may be connected in signal communication with the inverter 112 to control operation of the inverter 112 and, thereby, control operation (e.g., rotation speed, a rotation direction, a torque input, and/or torque output) of the electric motor 108. The electric motor 108 may additionally be configured to generate electrical power for storage by the battery 110. For example, during some operating conditions of the engine assembly 24, excess power from the engine 28 and/or the gas turbine engine 30 may be used to drive rotation of the electric motor 108 to generate electrical power for storage by the battery 110.

FIG. 5 illustrates a configuration of the aircraft 1000 including two propulsion systems 20, for example, a left-hand (LH) propulsion system 20A including a LH engine assembly 24A, 24 and a right-hand (RH) propulsion system 20B including a RH engine assembly 24B, 24. The electric control assembly 106 of FIG. 5 is electrically connected with electrical components of the LH engine assembly 24A and the RH engine assembly 24B. For example, the electric control assembly 106 of FIG. 5 includes a first electric motor 108A, 108 coupled with the gear assembly 76 of the LH engine assembly 24A and a second electric motor 108B, 108 coupled with the gear assembly 76 of the RH engine assembly 24B. Each of the electric motors 108A, 108B is electrically connected to the battery 110. The electric control assembly 106 of FIG. 5 further includes a first inverter 112A, 112 electrically connected between the first electric motor 108A and the battery 110 and a second inverter 112B, 112 electrically connected between the second electric motor 108B and the battery 110. The inverters 112A, 112B are configured to control a frequency, a voltage, and/or a current of electrical power supplied to the electric motors 108A, 108B from the battery 110, for example, to control a rotation speed and/or a torque of the electric motors 108A, 108B. The controller 26 may be connected in signal communication with the inverters 112A, 112B to control operation of the inverters 112A, 112B and, thereby, control operation (e.g., rotation speed, a rotation direction, a torque input, and/or torque output) of the electric motors 108A, 108B.

While the principles of the invention have been described above in connection with specific apparatuses and methods, it is to be clearly understood that this description is made only by way of example and not as limitation on the scope of the invention. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this invention by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the inventions may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the inventions--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. An engine assembly (24) for an aircraft propulsion system (20; 20A, 20B), the engine assembly (24) comprising:
a propulsor (22);
a first gearbox (32) including a first gear assembly (70) coupled with the propulsor (22);
an engine (28) including an air inlet (36), an exhaust outlet (38), and an engine output shaft (40), wherein the engine output shaft (40) is coupled with the first gear assembly (70) and configured to drive rotation of the propulsor (22) through the first gear assembly (70);
a gas turbine engine (30) including a first rotational assembly (56), a compressor section (42), a turbine section (44), and a combustor (46), wherein the first rotational assembly (56) is configured for rotation about a rotational axis (48), the first rotational assembly (56) includes a bladed compressor rotor (62) for the compressor section (42), a bladed first turbine rotor (64) for the turbine section (44), and a first shaft (60) interconnecting the bladed compressor rotor (62) and the bladed first turbine rotor (64), the compressor section (42) is connected to the air inlet (36) and configured to direct a compressed air to the air inlet (36), the combustor (46) is connected to the exhaust outlet (38) and configured to receive an exhaust gas (96) from the exhaust outlet (38), and the combustor (46) is configured to direct a combustion gas (98) through the turbine section (44) to drive rotation of the bladed first turbine rotor (64); and
a variable speed drive, VSD, (34) coupling the first rotational assembly (56) to the first gear assembly (70), wherein the VSD (34) is configured to selectively apply a rotational force from the first rotational assembly (56) to the first gear assembly (70) to further drive rotation of the propulsor (22) through the first gear assembly (70).

2. The engine assembly (24) of claim 1, wherein the gas turbine engine (30) further includes a second rotational assembly (58), the second rotational assembly (58) includes a bladed second turbine rotor (68) for the turbine section (44) and a second shaft (66), the second shaft (66) interconnects the bladed second turbine rotor (68) and the first gear assembly (70) to further drive rotation of the propulsor (22) through the first gear assembly (70), and the combustor (46) is configured to direct the combustion gas (98) through the turbine section (44) to drive rotation of the bladed first turbine rotor (64) and the bladed second turbine rotor (68).

3. The engine assembly (24) of claim 2, wherein:
the first shaft (60) and the second shaft (66) are concentric shafts; and/or
the bladed second turbine rotor (68) is downstream of the first bladed turbine rotor (64) with respect to the combustion gas (98).

4. The engine assembly (24) of any preceding claim, wherein the VSD (34) includes a first pump (82), a second pump (84), and a conduit circuit (86) connecting the first pump (82) and the second pump (84) in fluid communication, the first pump (82) is coupled with the first rotational assembly (56), and the second pump (84) is coupled with the first gear assembly (70).

5. The engine assembly (24) of claim 4, wherein the first pump (82) is a variable displacement pump and the second pump (84) is a fixed displacement pump.

6. The engine assembly (24) of claim 5, wherein the first pump (82) includes a displacement control assembly (94) configured to control a displacement of the first pump (82), the engine assembly (24) further comprises a controller (26) connected in signal communication with the displacement control assembly (94), and the controller (26) includes a processor (100) in communication with a non-transitory memory (102) storing instructions, which instructions when executed by the processor (100), cause the processor (100) to:
control the displacement control assembly (94) to change the displacement of the first pump (82) to apply the rotational force from the first rotational assembly (56) to the first gear assembly (70); and/or
control the displacement control assembly (94) to change the displacement of the first pump (82) to change a rotation speed of the bladed compressor rotor (62).

7. The engine assembly (24) of any preceding claim, wherein the engine (28) is an intermittent internal combustion engine (28).

8. The engine assembly (24) of any preceding claim, further comprising a second gearbox (78) and a drive shaft (72), wherein the second gearbox (78) includes a second gear assembly (76), the drive shaft (72) couples the first gear assembly (70) with the second gear assembly (76), and the second gear assembly (76) couples the drive shaft (72) with the propulsor (22).

9. The engine assembly (24) of claim 8, further comprising an electric control assembly (106) including an electric motor (108) and a battery (110), wherein the electric motor (108) is coupled to the second gear assembly (76), and the electric motor (108) is electrically connected to the battery (110).

10. An engine assembly (24) for an aircraft propulsion system (20; 20A, 20B), the engine assembly (24) comprising:
a propulsor (22);
a gearbox (32) including a gear assembly (70) coupled with the propulsor (22);
an engine (28) including an air inlet (36), an exhaust outlet (38), and an engine output shaft (40), wherein the engine output shaft (40) is coupled with the gear assembly (70) and configured to drive rotation of the propulsor (22) through the gear assembly (70); and
a gas turbine engine (30) including a first rotational assembly (56), a second rotational assembly (58), a compressor section (42), a turbine section (44), and a combustor (46), wherein the first rotational assembly (56) and the second rotational assembly (58) are configured for rotation about a rotational axis (48), the first rotational assembly (56) includes a bladed compressor rotor (62) for the compressor section (42), a bladed first turbine rotor (64) for the turbine section (44), and a first shaft (60) interconnecting the bladed compressor rotor (62) and the bladed first turbine rotor (64), the second rotational assembly (58) includes a bladed second turbine rotor (68) and a second shaft (66), the second shaft (66) is coupled with the gear assembly (70) to further drive rotation of the propulsor (22) through the gear assembly (70), the compressor section (42) is connected to the air inlet (36) and configured to direct a compressed air to the air inlet (36), the combustor (46) is connected to the exhaust outlet (38) and configured to receive an exhaust gas (96) from the exhaust outlet (38), and the combustor (46) is configured to direct a combustion gas (98) through the turbine section (44) to drive rotation of the bladed first turbine rotor (64).

11. The engine assembly (24) of claim 10, wherein the first shaft (60) is coupled with the gear assembly (70) to further drive rotation of the propulsor (22) through the gear assembly (70).

12. The engine assembly (24) of claim 10 or 11, wherein:
the bladed second turbine rotor (68) is downstream of the first bladed turbine rotor (64) with respect to the combustion gas (98); and/or
the turbine section (44) is disposed between the combustor (46) and the compressor section (42).

13. The engine assembly (24) of any of claims 10 to 12, further comprising a heat exchanger (54) connected in fluid communication between the compressor section (42) and the air inlet (36), wherein the heat exchanger (54) is configured to cool the compressed air directed from the compressor section (42) to the air inlet (36).

14. The engine assembly (24) of any of claims 10 to 13, wherein:
the first shaft (60) is coupled with the gear assembly (70) by a variable speed drive, VSD, (34); or
the engine assembly (24) further comprises a variable speed drive, VSD, (34) coupling the first rotational assembly (56) to the gear assembly (70), the VSD (34) is configured to selectively apply a rotational force from the first rotational assembly (56) to the gear assembly (70).

15. The engine assembly (24) of claim 14, wherein the VSD (34) includes a first pump (82), a second pump (84), and a conduit circuit (86) connected the first pump (82) and the second pump (84) in fluid communication, the first pump (82) is coupled with the first rotational assembly (56), and the second pump (84) is coupled with the gear assembly (70), wherein, optionally:
one of the first pump (82) or the second pump (84) is a variable displacement pump and another of the first pump (82) or the second pump (84) is a fixed displacement pump.
